# FASCICULE DE BREVET EUROPEEN

(11) **EP 2 431 824 B1**
(45) Date de publication et mention de la délivrance du brevet: **03.05.2017**
(21) Numéro de dépôt: 10177822.3
(22) Date de dépôt: 21.09.2010
(51) Int. Cl.: G04B 19/00, G04B 19/08, G01D 13/02, G04B 19/06, G01D 13/22

(54) **Affichage sectoriel multiple**
Multiple sektorielle Anzeige
Multiple sectoral display

(43) Date de publication de la demande: 21.03.2012
(73) Titulaire: ETA SA Manufacture Horlogère Suisse, 2540 Grenchen (CH)
(72) Inventeur: Courvoisier, Raphaël, 2037, Montmollin (CH); Egli, Roman, 4702, Oensingen (CH); Bravo, Paulo, 2068, Hauterive (CH)
(74) Mandataire: Giraud, Eric

(56) Documents cités:
- FR-A1- 2 793 898
- US-A- 5 257 246

## Description

L'invention concerne un mécanisme d'affichage sectoriel multiple et de découplage de l'affichage d'une grandeur physique sur un instrument scientifique ou une pièce d'horlogerie, dont la plage totale de la variation de ladite grandeur physique est couverte par un ensemble de plages partielles, sur une pluralité d'affichages partiels distincts agencés chacun pour représenter l'évolution de ladite grandeur physique sur une dite plage partielle donnée qui lui est propre, au-delà et en-deçà de valeurs limites prédéterminées, de façon à ce que la plage totale de variation de ladite grandeur physique soit couverte par l'ensemble desdites plages partielles, chaque dit affichage partiel comportant un indicateur mobile par rapport à une échelle ou une échelle graduée représentant ladite plage partielle propre audit affichage partiel considéré, et chaque dit affichage partiel comporte un mécanisme continu couvrant ladite plage totale de variation de ladite grandeur physique, lesdits mécanismes continus desdits affichages partiels étant tous synchrones entre eux.

L'invention concerne encore une pièce d'horlogerie comportant au moins un tel mécanisme.

### Domaine de l'invention

L'invention concerne le domaine des instruments scientifiques, et plus particulièrement le domaine de l'horlogerie.

Le problème technique que se propose de résoudre l'invention est de répartir, sur un instrument scientifique ou une pièce d'horlogerie, l'affichage d'une même grandeur physique donnée sur une pluralité d'afficheurs, chacun de ces afficheurs ayant à représenter l'évolution de cette grandeur physique sur une plage donnée au-delà et en-deçà de valeurs limites prédéterminées.

En fonction du type d'affichage principal de la pièce d'horlogerie, et des complications qu'elle comporte, il peut s'avérer nécessaire, ou simplement avantageux, de libérer, pour cet affichage principal ou/et certaines de ces complications, une ou plusieurs zones particulières du cadran de la pièce d'horlogerie, et notamment la partie centrale du cadran.

Il est alors utile de pouvoir reporter dans des zones moins encombrées l'affichage de certaines grandeurs.

### Arrière-plan de l'invention

Il est connu d'utiliser des affichages de type rétrograde, permettant d'utiliser des secteurs de cadran de forme sensiblement triangulaire. Toutefois l'affichage rétrograde décontenance certains utilisateurs, qui préfèrent un affichage de type continu.

Un brevet FR 647 409 au nom de Lancel fait défiler, sur un secteur circulaire gradué, l'affichage de l'heure par l'un de trois mobiles en formes de croix entraînés en pivotement par un support en Y pivotant toujours dans le même sens, tous cachés par un disque à l'exception d'une seule branche de croix, présentée dans un espace annulaire face au secteur circulaire gradué.

De façon analogue, un brevet EP 0 950 932 au nom de Daniel Roth et Gerald Genta décrit un mobile en pivotement continu portant deux aiguilles doubles opposées et pivotantes, cachées à l'exception d'un secteur annulaire, face à un secteur circulaire gradué sur une amplitude de 180°.

On connaît encore des mécanismes continus à plusieurs bras, éventuellement conjugués avec un mécanisme identique tournant en sens inverse face au même cadran, comme dans le brevet CH 699 117 au nom de Agenhor:

On connaît encore les montres « Paul Picot Technograf », comportant deux demi-cadrans en demi-lune de part et d'autre d'un cadran central, dont chacun a une fonction différente et comporte une échelle interne et une échelle externe face à laquelle se positionne une extrémité respectivement courte ou longue d'une même aiguille double :

Le principe général est de ces mécanismes connus est de combiner un masque et une ou plusieurs aiguilles spéciales de façon à donner l'apparence d'une discontinuité.

On connaît un document FR 2 793 898 au nom de TIMENTEL PTY, qui divulgue une montre à deux boîtiers juxtaposés, dont les deux mouvements sont synchronisés par des conducteurs électriques, chacun des mouvements étant équipé d'un affichage rétrograde, de façon à ce que ses aiguilles, chacune manoeuvrée par un moteur, soient, ou bien à l'arrêt derrière un masque, ou bien en évolution sur un demi-cadran respectivement inférieur ou supérieur.

En somme, si on rencontre des mécanismes avec des dispositions particulières d'aiguilles, ou, plus généralement de doigts d'affichage, face à un cadran gradué unique ou à des cadrans gradués concentriques, leur affichage est de type rétrograde, leur fonctionnement est parfois complexe, et leur encombrement s'accommode mal des contraintes d'utilisation de l'espace disponible évoquées plus haut.

### Résumé de l'invention

L'invention se propose d'apporter une solution d'affichage de type continu, au problème de répartir, sur une pièce d'horlogerie, l'affichage d'une même grandeur physique donnée sur une pluralité d'afficheurs, chacun de ces afficheurs ayant à représenter l'évolution de cette grandeur physique sur une plage donnée au-delà et en-deçà de valeurs limites prédéterminées.

Cette grandeur physique peut être une grandeur liée au temps, mais aussi bien une autre grandeur physique, par exemple barométrique, hygrométrique, ou autre.

A cet effet l'invention concerne un mécanisme d'affichage sectoriel multiple et de découplage de l'affichage d'une grandeur physique sur un instrument scientifique ou une pièce d'horlogerie, dont la plage totale de la variation de ladite grandeur physique est couverte par un ensemble de plages partielles, sur une pluralité d'affichages partiels distincts agencés chacun pour représenter l'évolution de ladite grandeur physique sur une dite plage partielle donnée qui lui est propre, au-delà et en-deçà de valeurs limites prédéterminées, de façon à ce que la plage totale de variation de ladite grandeur physique soit couverte par l'ensemble desdites plages partielles, chaque dit affichage partiel comportant un indicateur mobile par rapport à une échelle ou une échelle graduée représentant ladite plage partielle propre audit affichage partiel considéré, et chaque dit affichage partiel comporte un mécanisme continu couvrant ladite plage totale de variation de ladite grandeur physique, lesdits mécanismes continus desdits affichages partiels étant tous synchrones entre eux, caractérisé en ce que chaque dit affichage partiel est agencé pour déplacer son dit indicateur mobile face à une échelle représentant ladite plage totale, et en ce que chaque dit affichage partiel comporte des moyens d'occultation agencés pour ne laisser visible son dit indicateur mobile que face à ladite échelle représentant ladite plage partielle qui lui est propre, et pour réduire ou annuler la visibilité de son dit indicateur mobile face aux échelles représentant les autres plages partielles que la sienne.

Selon une caractéristique de l'invention, lesdits moyens d'occultation comportent au moins un masque agencé pour ne laisser apparaître que ladite plage partielle qui lui est propre, et pour cacher les autres plages partielles que la sienne, ainsi que pour cacher son dit indicateur mobile propre quand ce dernier est devant ou face à une autre plage partielle que la sienne.

Selon une caractéristique de l'invention, chaque dit mécanisme continu a un mouvement cyclique.

Plus particulièrement, selon une autre caractéristique de l'invention, chaque dit mécanisme continu a un mouvement périodique.

Selon une caractéristique propre à un mode de réalisation préféré, ladite grandeur physique est une grandeur de temps.

L'invention concerne encore une pièce d'horlogerie comportant au moins un tel mécanisme.

### Description sommaire des dessins

D'autres caractéristiques et avantages de l'invention apparaîtront à la lecture de la description qui va suivre, en référence aux dessins annexés dans lesquels :
- la figure 1 représente, de façon schématisée et en vue de face, une pièce d'horlogerie comportant un mécanisme selon l'invention, dans un premier mode de réalisation ;
- la figure 2 représente la pièce d'horlogerie de la figure 1, représentée sans son aiguillage principal et après enlèvement d'un masque que comporte le mécanisme selon l'invention ;
- la figure 3 représente, de façon schématisée et en vue de face, une pièce d'horlogerie comportant un mécanisme selon l'invention, dans un second mode de réalisation ;
- la figure 4 représente, de façon schématisée et en vue de face, une pièce d'horlogerie comportant un mécanisme selon l'invention, dans un troisième mode de réalisation ;
- la figure 5 représente, de façon schématisée, partielle et en coupe, la pièce d'horlogerie de la figure 1 ;
- la figure 6 représente, de façon schématisée et en vue de face, une pièce d'horlogerie comportant un mécanisme selon l'invention, dans une autre variante de réalisation ;
- la figure 7 représente, de façon schématisée et en vue de face, une pièce d'horlogerie comportant un mécanisme selon l'invention, dans une autre variante de réalisation basée sur l'aspect visuel de l'indicateur et du cadran ;
- la figure 8 représente, de façon schématisée et en vue de face, une pièce d'horlogerie comportant un mécanisme selon l'invention, dans le mode de réalisation de la figure 1, dans une présentation similaire à la pièce de la figure 7 ;
- les figures 9 et 10 représentent, de façon schématisée et en vue de face, un affichage partiel selon la variante de réalisation de la figure 7, avec un autre type de décor, la figure 9 représentant l'affichage de la grandeur physique dans une plage partielle, et la figure 10 représentant le passage dans une zone correspondant à une autre plage partielle que l'affichage partiel concerné ;
- les figures 11 à 13 illustrent des variantes d'agencement de pièces d'horlogerie réalisées avec un affichage sectoriel multiple selon l'invention.

### Description détaillée des modes de réalisation préférés

L'invention concerne le domaine des instruments scientifiques, et plus particulièrement le domaine de l'horlogerie.

Le découplage de l'affichage d'une grandeur physique sur plusieurs affichages partiels permet, non seulement de tirer parti du volume disponible dans un instrument scientifique ou dans une pièce d'horlogerie, mais aussi d'offrir à l'utilisateur une information relative à un domaine particulier, et permet d'effectuer une visualisation différente, quant à l'échelle d'affichage, ou encore à la couleur d'un indicateur, pour une ou plusieurs plages particulières.

Par exemple, un compteur de radioactivité peut afficher, dans une première plage basse et dans une première fenêtre de petite taille, le niveau de radioactivité mesuré jusqu'à un certain premier seuil. Au-delà de ce premier seuil, l'affichage est réalisé, par exemple avec une aiguille de couleur différente et dans une deuxième fenêtre de plus grande taille que la première, pour une seconde plage correspondant à une zone nécessitant précaution renforcée, jusqu'à un second seuil. Au-delà de ce second seuil, une troisième zone dangereuse est mise en évidence par une troisième fenêtre de plus grande taille encore, et avec une aiguille d'une autre couleur.

L'invention sera ici plus particulièrement décrite pour une réalisation préférée pour une pièce d'horlogerie, mais on comprend au vu de l'exemple précédent qu'on peut la mettre en oeuvre pour la visualisation de tout type de grandeur physique, en liaison avec des moyens de mesure, ou/et de comptage, ou/et de génération d'une grandeur physique, sur un appareil qu'on appellera ci-après instrument scientifique.

L'invention concerne un mécanisme 1 d'affichage sectoriel multiple et de découplage de l'affichage d'une grandeur physique sur un instrument scientifique ou une pièce d'horlogerie 100, sur une pluralité d'affichages partiels 2.

Ces affichages partiels 2 sont distincts, et agencés chacun pour représenter l'évolution de cette grandeur physique sur une plage partielle 3 donnée, qui lui est propre, au-delà et en-deçà de valeurs limites prédéterminées, de façon à ce que la plage totale de variation de cette grandeur physique soit couverte par l'ensemble des plages partielles 3. Chaque tel affichage partiel 2 comporte un indicateur 4 mobile par rapport à une échelle 5, notamment une échelle graduée, représentant cette plage partielle 3 propre à l'affichage partiel 2 considéré.

Selon l'invention, chaque tel affichage partiel 2 comporte un mécanisme continu 11 couvrant la plage totale de variation de cette grandeur physique, et qui est agencé pour déplacer son indicateur mobile 4 sur la plage totale. De plus, chaque affichage partiel 2 comporte des moyens d'occultation agencés pour ne laisser visible son indicateur 4 mobile que face à cette échelle 5 représentant la plage partielle 3 qui lui est propre, et encore agencés pour réduire ou annuler la visibilité de cet indicateur 4 mobile face aux autres plages partielles que la sienne.

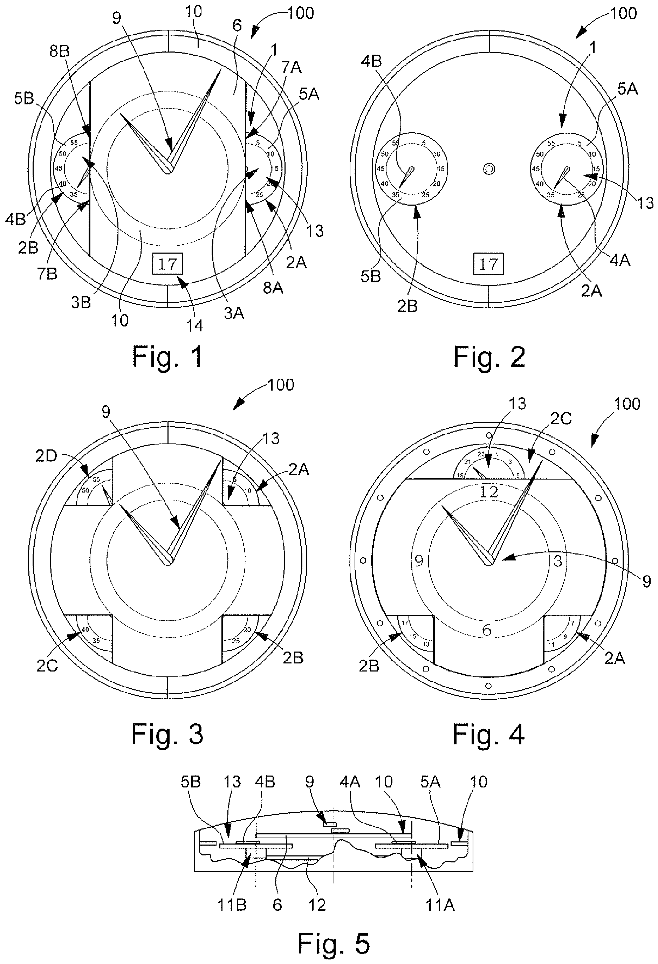

Dans une réalisation particulière, tel que visible sur les figures 1, 3, 4, 5, 6, et 8, chaque affichage partiel 2 comporte un masque 6 agencé pour ne laisser apparaître que la plage partielle 3 qui lui est propre, et pour cacher les autres plages partielles que la sienne ainsi que pour cacher son indicateur mobile 4 propre quand ce dernier est devant ou face à une autre plage partielle que la sienne.

Dans une réalisation simplifiée, les moyens d'occultation résident dans la forme ou/et le décor des indicateurs mobiles 4, typiquement des aiguilles, ou/et dans le décor d'un cadran principal 10.

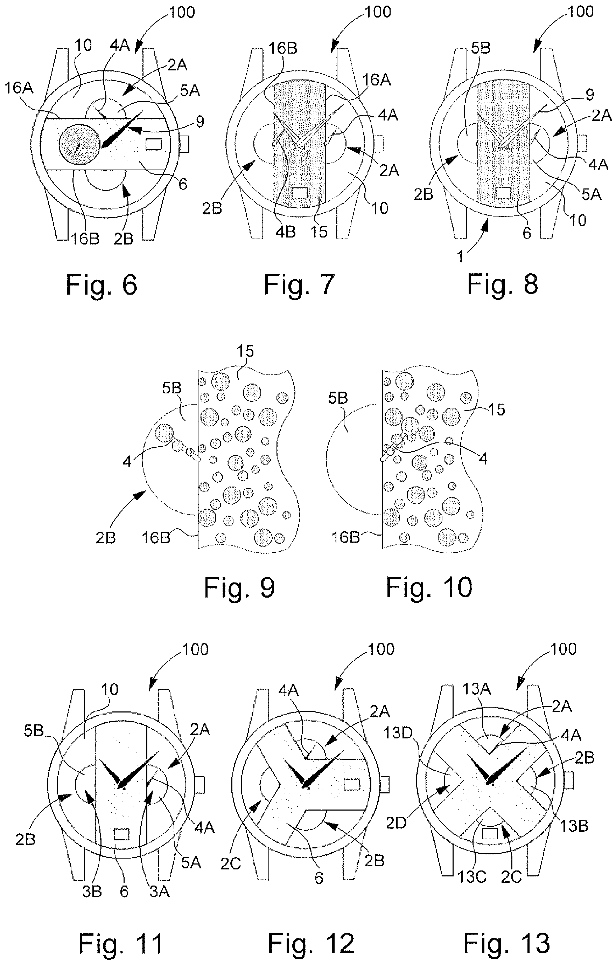

La figure 7 illustre le cas d'aiguilles 4A et 4B qui comportent le même décor qu'une partie décorée 15 que comporte le cadran principal 10, cette partie décorée étant délimitée par des frontières 16A et 16B de décor correspondant aux affichages partiels 2A et 2B.

Il est possible de ne jouer que sur les couleurs comme dans le cas de la figure 7.

Il est aussi possible de jouer sur la texture du décor, à la fois des indicateurs mobiles 4 et d'une partie colorée 15 du fond, tel que visible sur les figures 9 et 10, où le décor est de texture aléatoire, ce qui rend très difficile la localisation de l'aiguille 4 par rapport à la partie décorée 15 du cadran. Cette texture aléatoire procure un effet de camouflage, et il est presque impossible de visualiser l'aiguille 4 devant le décor 15.

De façon propre à l'invention, les mécanismes continus 11 de ces affichages partiels 2 du mécanisme 1 sont tous synchrones entre eux.

Dans une réalisation préférée, le mécanisme 1 est conçu pour une pièce d'horlogerie 100.

De préférence, chaque mécanisme continu 11 de chaque affichage partiel 2 a un mouvement cyclique, et de façon plus particulière, a un mouvement périodique.

Dans l'application préférée décrite ici, la grandeur physique, à l'affichage de laquelle est dédié le mécanisme 1, est une grandeur de temps.

Chaque mécanisme continu 11 est agencé pour être couplé de façon synchrone à un mouvement 12 que comporte cet instrument scientifique ou cette pièce d'horlogerie 100.

Telle que représentée sur les figures, l'invention effectue un découplage de l'affichage d'au moins une grandeur physique, les secondes sur les figures 1 à 3, ou les heures sur la figure 4, sur une pluralité d'échelles 5, notamment graduées, situées chacune sur un cadran 13, lequel couvre un domaine partiel de l'amplitude totale possible de cette grandeur physique.

Un indicateur mobile 4 est constitué dans le cas des figures par une aiguille, il peut encore être réalisé sous la forme d'un doigt d'affichage, d'un disque à guichet, ou autre.

L'affichage complet est visible par secteur, et l'utilisateur a l'impression que la même aiguille saute d'un cadran à l'autre.

Les mouvements des mécanismes continus 11 des affichages partiels 2, qui entraînent ces indicateurs mobiles 4 sont tous synchrones entre eux, et ces affichages partiels 2 constituent des affichages continus.

Chacun des affichages partiels comporte un masque 6, comportant un premier bord 7 correspondant à la limite inférieure prédéterminée de la plage partielle 3 que rend visible l'affichage partiel 2 concerné, et un second bord 8 correspondant à la limite supérieure prédéterminée de la même plage.

Dans l'exemple des figures, tous les masques 6 sont jointifs et constituent un masque unique, mais ceci n'est qu'un cas particulier de réalisation.

Dans une version particulière de l'invention, non représentée sur les figures, l'amplitude de chaque masque 6 est réglable par l'utilisateur, par exemple par une molette située en périphérie de lunette, et comportant un moyen de blocage/déblocage. Cette configuration permet à l'utilisateur de formater chacune des plages partielles 3 des affichages partiels 2 du mécanisme 1. Dans cette version, une réalisation particulière lie les masques 6 entre eux, par exemple par un engrenage, de façon à ce qu'une action d'ajustement d'un premier bord 7, respectivement second bord 8, d'un masque 6 d'un affichage partiel 2 donné entraîne l'ajustement d'un second bord 8, respectivement d'un premier bord 7, d'un autre affichage partiel 2 qui correspond à la plage précédente, respectivement suivante, dans l'échelle des valeurs de la grandeur physique dont on effectue l'affichage.

D'autres moyens d'occultation que des masques peuvent être utilisés sans s'éloigner pour autant de l'invention. L'important est que tous ces moyens d'occultation ou masques 6 soient agencés pour cacher, à chaque instant, tous ces indicateurs mobiles 4 à l'exception d'un seul, que l'utilisateur voit sur l'affichage partiel 2 correspondant. On comprend que, à tout instant, dans l'exemple des figures, une seule des aiguilles de l'un des affichages partiels est visible, l'autre ou les autres selon le nombre d'affichages partiels 2, qui est de 2 pour les figures 1 et 2, de 4 pour la figure 3, de 3 pour la figure 4, étant cachées.

Le masque 6 est encore utilisable pour supporter un guichet 14 pour l'affichage d'une autre information, par exemple la date.

Les figures 1 à 3 illustrent un affichage sectoriel des secondes, qui sont affichées dans des zones de la pièce d'horlogerie 100 où l'utilisateur s'attend à les voir. Les figures 1 et 2 montrent le cas d'un affichage par demi-disques, la figure 2 montre que les affichages partiels 2A et 2B sont identiques, absolument synchrones, et comportent chacun une aiguille 4A, 4B, de même position angulaire. Le masque 6 de la figure 1 masque l'aiguille 4A à l'instant représenté, seule est visible l'aiguille 4B de l'affichage 2B. Quand le mécanisme 11 B de l'affichage partiel 2B entraînera l'aiguille 4B au-delà de sa position à douze heures, l'aiguille 4B ne sera plus visible car passant sous le second bord 8B et cachée par le masque 6. A cet instant précis, l'aiguille 4A de l'affichage partiel 2A deviendra quant à elle visible à droite du premier bord 7A de l'affichage partiel 2A, sur lequel elle restera visible jusqu'à ce qu'elle disparaisse, à sa position à six heures, sous le second bord 8A, l'autre aiguille 4B de l'affichage partiel 2B devenant alors visible après le franchissement du premier bord 7B, tel que visible sur la figure 1.

La figure 3 illustre un découplage sur quatre quadrants constituant les affichages partiels 2A, 2B, 2C, 2D, le fonctionnement est similaire à celui décrit pour les figures 1 et 2.

On comprend que l'invention permet d'effectuer des affichages différenciés pour des plages d'amplitude inégale, par exemple dans le cas de la figure 4, qui propose un affichage sectoriel de l'heure sur 24 heures, en différenciant un affichage horaire du matin sur une plage d'amplitude de 6 heures sur l'affichage partiel 2A, de l'après-midi sur une plage de 6 heures sur l'affichage partiel 2B, et de la nuit sur une plage de 12 heures sur l'affichage partiel 2C, avec des échelles de visualisation différentes. Il est ainsi possible de proposer à l'utilisateur, à bas coût, un modèle de pièce d'horlogerie avec un affichage de type particulier selon sa profession ou ses activités.

On voit aussi, sur ce même exemple de la figure 4, que la grandeur physique à laquelle on s'intéresse, ici l'heure, peut être représentée de façon différente, par exemple sur 12 heures sur un aiguillage principal 9 de la pièce d'horlogerie 100 qui est mobile par rapport à un cadran principal 10, et sur 24 heures sur le mécanisme 1 et ses affichages partiels 2A, 2B, 2C, ce qui permet d'offrir à l'utilisateur un affichage AM/PM et jour/nuit, en plus de l'affichage usuel auquel il est habitué.

La figure 5 illustre un exemple d'entraînement des indicateurs mobiles 4A et 4B, par des mécanismes continus 11 A et 11 B, qui peuvent être réduits chacun à un simple pignon engrenant avec une roue du mouvement 12 de la pièce d'horlogerie 100. Cet exemple est le moins coûteux, mais d'autres entraînements, par courroie, chaîne, ou autre, sont aussi utilisables sans s'éloigner de l'invention.

Une application particulière concerne des applications sportives, avec des cadrans de taille différenciée pour distinguer, par exemple, les derniers instants avant le départ d'une épreuve comme une régate, qui ont une importance particulière pour l'utilisateur, des instants précédents qui concernent une phase d'attente réglementaire. L'invention peut être aussi jumelée avec un compte à rebours. Le mécanisme 1 permet une inversion facile du sens de pivotement des indicateurs mobiles, et l'affichage sectoriel peut être réalisé, partiellement ou entièrement, dans le sens du rebours.

En somme, l'invention permet de réaliser à bas coût un affichage sectoriel multiple. Le découpage de l'affichage d'une grandeur physique sur plusieurs zones permet d'utiliser encore mieux l'espace disponible, en utilisant sur chaque zone un espace restreint disponible pour afficher très lisiblement une information qui devrait être cantonnée à un affichage de très petite taille, si son affichage n'était pas fragmenté.

La disposition judicieuse d'une pluralité d'afficheurs pour des plages différentes de la même information peut, encore, permettre de disposer ces afficheurs dans des régions du cadran où l'utilisateur s'attend à les voir. Par exemple le découpage en quatre quadrants, reportés aux quatre coins d'un boîtier carré ou rectangulaire, permet de montrer à l'utilisateur, dans chacun de ces coins, la plage horaire, par exemple, qu'il a l'habitude de voir dans l'angle au centre par rapport au centre du cadran.

La répartition de l'information est faite sur plusieurs afficheurs, mais dont, à chaque instant, un seul de ces afficheurs visualise l'information, ce qui permet encore de créer une animation du cadran de la pièce d'horlogerie par un saut périodique de l'affichage de l'information d'un afficheur à un autre.

Cette disposition permet un séquencement de l'affichage qui a un rythme propre, et qui apporte ainsi une information nouvelle à l'utilisateur, relativement au passage d'un domaine à un autre de la grandeur physique concernée.

Cette animation de l'affichage peut autoriser des effets de type mystérieux, par exemple lors de l'affichage par une aiguille qui semble disparaître d'un des afficheurs, alors qu'une aiguille identique, qui semble être la même, semble apparaître sur une autre des afficheurs, correspondant à la plage suivante d'affichage de la grandeur physique concernée.

Les avantages de l'invention sont nombreux : simplicité du mécanisme ; et coût réduit, faible encombrement ; facilité de lecture de l'information, et aspect innovant.

## Revendications

1. Mécanisme (1) d'affichage sectoriel multiple et de découplage de l'affichage d'une grandeur physique sur un instrument scientifique ou une pièce d'horlogerie (100), dont la plage totale de la variation de ladite grandeur physique est couverte par un ensemble de plages partielles (3), sur une pluralité d'affichages partiels (2) distincts agencés chacun pour représenter l'évolution de ladite grandeur physique sur une dite plage partielle (3) donnée qui lui est propre, au-delà et en-deçà de valeurs limites prédéterminées, de façon à ce que la plage totale de variation de ladite grandeur physique soit couverte par l'ensemble desdites plages partielles (3), chaque dit affichage partiel (2) comportant un indicateur (4) mobile par rapport à une échelle représentant ladite plage partielle (3) propre audit affichage partiel (2) considéré, et chaque dit affichage partiel (2) comporte un mécanisme continu (11) couvrant ladite plage totale de variation de ladite grandeur physique, lesdits mécanismes continus (11) desdits affichages partiels (2) étant tous synchrones entre eux, **caractérisé en ce que** chaque dit affichage partiel (2) est agencé pour déplacer son dit indicateur mobile (4) face à une échelle représentant ladite plage totale, et **en ce que** chaque dit affichage partiel (2) comporte des moyens d'occultation agencés pour ne laisser visible son dit indicateur (4) mobile que face à ladite échelle (5) représentant ladite plage partielle (3) qui lui est propre, et pour réduire ou annuler la visibilité de son dit indicateur (4) mobile face aux échelles représentant les autres plages partielles que la sienne.

2. Mécanisme (1) selon la revendication 1, **caractérisé en ce que** lesdits moyens d'occultation comportent au moins un masque (6) agencé pour ne laisser apparaître que ladite plage partielle (3) qui lui est propre, et pour cacher les autres plages partielles que la sienne, ainsi que pour cacher son dit indicateur mobile (4) propre quand ce dernier est devant ou face à une autre plage partielle que la sienne.

3. Mécanisme (1) selon l'une des revendications précédentes, **caractérisé en ce que** ladite échelle (5) est graduée.

4. Mécanisme (1) selon l'une des revendications précédentes, **caractérisé en ce que** chaque dit mécanisme continu a un mouvement cyclique.

5. Mécanisme (1) selon l'une des revendications précédentes, **caractérisé en ce que** chaque dit mécanisme continu a un mouvement périodique.

6. Mécanisme (1) selon l'une des revendications précédentes, **caractérisé en ce que** ladite grandeur physique est une grandeur de temps.

7. Mécanisme (1) selon l'une des revendications précédentes, **caractérisé en ce que** chaque dit mécanisme continu (11) est agencé pour être couplé de façon synchrone à un mouvement (12) que comporte ledit instrument scientifique ou ladite pièce d'horlogerie (100).

8. Pièce d'horlogerie (100) comportant au moins un mécanisme (1) selon l'une des revendications précédentes, **caractérisée en ce qu'**elle comporte un mouvement agencé pour entraîner de façon synchrone l'ensemble desdits mécanismes continus desdits affichages partiels (2).

## Patentansprüche

1. Mechanismus (1) zum Anzeigen in mehreren Sektoren und Entkoppeln der Anzeige einer physikalischen Größe auf einem wissenschaftlichen Instrument oder einem Zeitmessgerät (100), wobei der gesamte Variationsbereich der physikalischen Größe abgedeckt ist durch einen Satz von Teilbereichen (3) auf einer Mehrzahl von verschiedenen Teilanzeigen (2), wovon jede dafür ausgelegt ist, die Veränderung der physikalischen Größe auf einem solchen gegebenen, ihr eigenen Teilbereich (3) oberhalb und unterhalb vorbestimmter Grenzwerte darzustellen, derart, dass der gesamte Variationsbereich der physikalischen Größe durch den Satz von Teilbereichen (3) abgedeckt wird, wobei jede Teilanzeige (2) einen bewegbaren Anzeiger (4) in Bezug auf eine Skala, die den der betrachteten Teilanzeige (2) eigenen Teilbereich (3) darstellt, umfasst und wobei jede Teilanzeige (2) einen fortlaufenden Mechanismus (11) umfasst, der den gesamten Variationsbereich der physikalischen Größe abdeckt, wobei alle fortlaufenden Mechanismen (11) der Teilanzeigen (2) miteinander synchronisiert sind, **dadurch gekennzeichnet, dass** jede Teilanzeige (2) dafür ausgelegt ist, ihren bewegbaren Anzeiger (4) gegenüber einer Skala, die den gesamten Bereich darstellt, zu verstellen, und dass jede Teilanzeige (2) Abdeckungsmittel umfasst, die dafür ausgelegt sind, jeden bewegbaren Anzeiger (4) nur gegenüber der Skala (5), die den ihr eigenen Teilbereich (3) darstellt, sichtbar zu lassen und die Sichtbarkeit ihres bewegbaren Anzeigers (4) gegenüber Skalen, die die anderen Teilbereiche mit Ausnahme ihres eigenen darstellen, zu verringern oder aufzuheben.

2. Mechanismus (1) nach Anspruch 1, **dadurch gekennzeichnet, dass** die Abdeckungsmittel mindestens eine Blende (6) umfassen, die dafür ausgelegt ist, nur den ihr eigenen Teilbereich (3) sichtbar zu lassen und die anderen Teilbereiche mit Ausnahme ihres eigenen zu verdecken sowie ihren eigenen beweglichen Anzeiger (4) zu verdecken, wenn sich dieser Letztere vor einem oder gerichtet auf einen anderen Teilbereich als den eigenen befindet.

3. Mechanismus (1) nach einem der vorhergehenden Ansprüche, **dadurch gekennzeichnet, dass** die Skala (5) eine Teilung aufweist.

4. Mechanismus (1) nach einem der vorhergehenden Ansprüche, **dadurch gekennzeichnet, dass** jeder fortlaufende Mechanismus ein zyklisches Werk besitzt.

5. Mechanismus (1) nach einem der vorhergehenden Ansprüche, **dadurch gekennzeichnet, dass** jeder fortlaufende Mechanismus ein periodisches Werk besitzt.

6. Mechanismus (1) nach einem der vorhergehenden Ansprüche, **dadurch gekennzeichnet, dass** die physikalische Größe eine Zeitgröße ist.

7. Mechanismus (1) nach einem der vorhergehenden Ansprüche, **dadurch gekennzeichnet, dass** jeder fortlaufende Mechanismus (11) dafür ausgelegt ist, synchron mit einem Werk (12) gekoppelt zu sein, das das wissenschaftliche Instrument oder das Zeitmessgerät (100) aufweist.

8. Zeitmessgerät (100), umfassend mindestens einen Mechanismus (1) nach einem der vorhergehenden Ansprüche, **dadurch gekennzeichnet, dass** es ein Werk umfasst, das dafür ausgelegt ist, den Satz der fortlaufenden Mechanismen der Teilanzeigen (2) synchron anzutreiben.

## Claims

1. Multi-sector display mechanism (1) for separating the display of a physical quantity on a scientific instrument or a timepiece (100), wherein the total range of variation in said physical quantity is covered by a set of partial ranges (3), on a plurality of distinct partial displays (2), each arranged to represent the change in said physical quantity on a given partial range (3) specific thereto, above and below predetermined limit values, such that the total range of variation in said physical quantity is covered by the set of said partial ranges (3), each said partial display (2) including an indicator (4) that moves in relation to a scale showing said partial range (3) specific to said partial display (2) concerned, and each said partial display (2) including a continuous mechanism (11) covering said total range of variation in said physical quantity, said continuous mechanisms (11) of said partial displays (2) all being synchronous with each other, **characterized in that** each said partial display (2) is arranged to move its own said moving indicator (4) thereof opposite a scale representing said total range, and **in that** each said partial display (2) includes eclipsing means arranged for allowing the moving indicator (4) thereof to be seen only opposite said scale (5) representing said partial range (3) specific thereto, and for reducing or obscuring visibility of said moving indicator (4) thereof opposite the scales representing any other partial ranges.

2. Mechanism (1) according to claim 1, **characterized in that** said eclipsing means includes at least one mask (6) arranged for allowing only said partial range (3) specific thereto to be seen and for concealing any other partial ranges, and for concealing said moving indicator (4) specific thereto when said indicator is in front of or opposite any other partial range.

3. Mechanism (1) according to claim 1, **characterized in that** said scale (5) is graduated.

4. Mechanism (1) according to any of the preceding claims, **characterized in that** each said continuous mechanism has a cyclical movement.

5. Mechanism (1) according to any of the preceding claims, **characterized in that** each said continuous mechanism has a periodic movement.

6. Mechanism (1) according to any of the preceding claims, **characterized in that** said physical quantity is a time-related quantity.

7. Mechanism (1) according to any of the preceding claims, **characterized in that** each said continuous mechanism (11) is arranged to be coupled synchronously to a movement (12) comprised in said scientific instrument or said timepiece (100).

8. Timepiece (100) including at least one mechanism (1) according to any of the preceding claims, **characterized in that** it includes a movement arranged to drive all of said continuous mechanism of said partial displays (2) in a synchronous manner.
